# EUROPÄISCHE PATENTSCHRIFT

(11) **EP 1 208 322 B1**
(45) Veröffentlichungstag und Bekanntmachung des Hinweises auf die Patenterteilung: **21.07.2004**
(21) Anmeldenummer: 01951373.8
(22) Anmeldetag: 12.06.2001
(51) Int. Cl.: F16L 33/02

(54) **SCHLAUCHANORDNUNG**
TUBE ARRANGEMENT
SYSTEME TUBULAIRE

(30) Priorität: 27.06.2000 DE 10030335
(43) Veröffentlichungstag der Anmeldung: 29.05.2002
(73) Patentinhaber: Phoenix AG, 21079 Hamburg (DE)
(72) Erfinder: BROCKMANN, Hermann, 21244 Buchholz (DE); KÜDDELSMANN, Karsten, 21075 Hamburg (DE); PAPENFUSS, Wolfgang, 21149 Hamburg (DE); SEECK, Manfred, 21075 Hamburg (DE)
(86) Internationale Anmeldenummer: PCT/DE2001/002175
(87) Internationale Veröffentlichungsnummer: WO 2002/001106

(56) Entgegenhaltungen:
- EP-A- 0 593 852
- WO-A-98/19096
- DE-A- 19 533 553
- FR-A- 2 630 808
- US-A- 5 234 233
- US-A- 5 675 871

## Beschreibung

Die Erfindung betrifft eine Schlauchanordnung, umfassend einen Schlauch aus polymerem Werkstoff, der insbesondere mit einem eingebetteten Festigkeitsträger versehen ist, wobei wenigstens ein Schlauchende auf einen Stutzen aus Metall oder Kunststoff aufgeschoben ist, wobei wiederum eine Schelle, insbesondere eine Schraubschelle, das Schlauchende auf den Stutzen presst, wobei das Schlauchende mit einer aufgeschobenen Haltemanschette aus polymerem Werkstoff für die Schelle versehen ist, wobei wiederum die Haltemanschette im Rahmen eines einstückigen Formteiles folgende Bauteile umfasst:
- einen Haltering mit einem Innendurchmesser D1, der das Schlauchende mit einem Außendurchmesser D umgreift;
- eine Schellenaufnahme in Form von wenigstens zwei axial verlaufenden Haltestegen, die jeweils über ihr eines Ende mit dem Haltering verbunden sind; sowie
- einen Haltekragen am anderen Ende eines jeden Haltesteges.

Eine gattungsgemäße Schlauchanordnung ist in der WO 98/19096 A1 beschrieben und findet insbesondere im Kfz-Bereich eine breite Anwendung. Dabei kann der Stutzen ein Teil eines Aggregates (Zylinderkopf, Wasserpumpe, Kühler etc.) sein. Ein Kfz-Aggregatestutzen ist beispielsweise in der Druckschrift EP 0 367 136 B1 beschrieben.

Ein Stutzen kann auch ein T-förmiges Bauteil sein, auf den drei Schlauchabschnitte aufgeschoben werden. Diesbezüglich wird beispielsweise auf die Druckschrift DE 33 36 940 C2 verwiesen.

Bislang ist jedoch keine Lösung verfügbar, bei der Schellen, insbesondere Schraubschellen, im geöffneten Zustand positions- und verdrehsicher am Schlauchende montiert werden können.

Im Hintergrund dieser Problematik besteht die Aufgabe der Erfindung nun darin, die geöffnete Schelle definiert und verliersicher auf dem Schlauchende vorzumontieren, eine verdrehsichere Montage zu gewährleisten sowie die Schlauchmontage an schwer zugänglichen Stellen zu vereinfachen. Darüber hinaus soll die Schellenmontage bauteilunabhängig sein.

Gelöst wird diese Aufgabe gemäß Kennzeichen des Patentanspruches 1 dadurch, dass
- der Innendurchmesser D1 des Halteringes kleiner ist als der Außendurchmesser D des Schlauchendes, und zwar unter Bildung einer vorgespannten Haltemanschette;
- die Haltemanschette so angeordnet ist, dass die Haltekragen der Stirnseite des Schlauchendes zugewandt sind; sowie
- der Schlauch bzw. das Schlauchende und die Haltemanschette aus einem Elastomeren oder einem thermoplastischen Elastomeren bestehen, wobei die Haltemanschette eine größere Shore-Härte aufweist als der Schlauch bzw. das Schlauchende.

Zweckmäßige Ausgestaltungen der erfindungsgemäßen Schlauchanordnung sind in den Patentansprüchen 2 bis 18 genannt.

Die Erfindung wird nun anhand von Ausführungsbeispielen unter Bezugnahme auf schematische Zeichnungen erläutert. Es zeigen:
- Fig. 1: eine Haltemanschette mit zwei Haltestegen;
- Fig. 2: eine Haltemanschette mit drei Haltestegen;
- Fig. 3: eine Haltemanschette mit vier Haltestegen und einem Kragenring;
- Fig. 4: eine Schlauchanordnung mit einer Haltemanschette gemäß Fig. 2;
- Fig. 5: die Durchmesserkonstellation einer Haltemanschette gemäß Fig. 2.

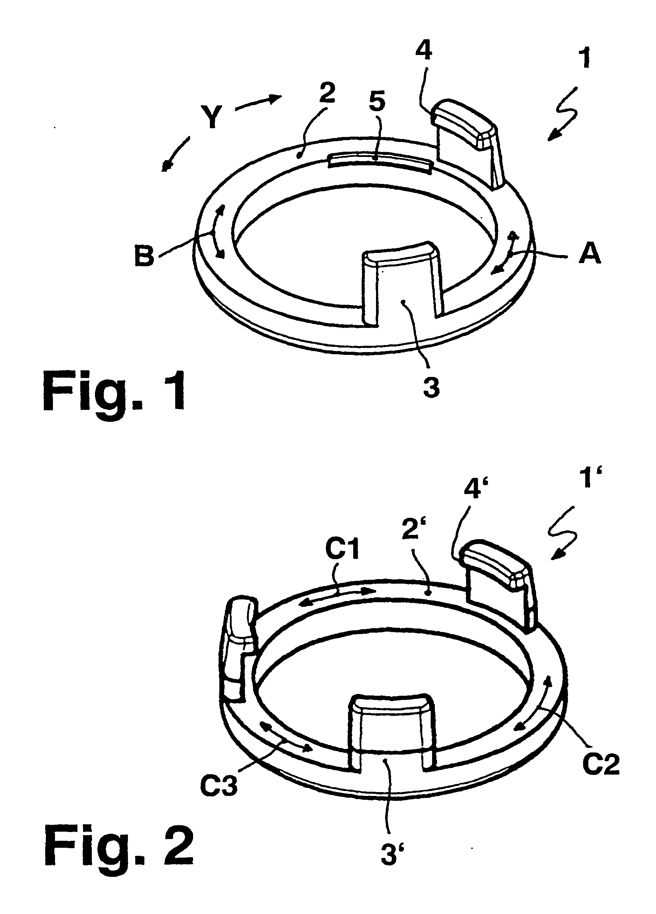

Fig. 1 zeigt eine Haltemanschette **1**, umfassend einen Haltering **2** sowie zwei axial verlaufende Haltestege **3** gleicher Breite, die wiederum jeweils mit einem Haltekragen **4** versehen sind. Die Haltestege sind dabei so angeordnet, dass in Umfangsrichtung Y des Halteringes zwischen den beiden Haltestegen ein kleiner Abstand A einerseits und ein großer Abstand B andererseits gebildet werden. Der große Abstand B ist vorzugsweise das zwei- bis dreifache des kleinen Abstandes A.

Nach Fig. 2 umfasst die Haltemanschette 1'einen Haltering **2'**, wobei hier drei Haltestege **3'** gleicher Breite vorhanden sind, die wiederum jeweils mit einem Haltekragen **4'** versehen sind. Die drei Haltestege sind in Umfangsrichtung Y des Halteringes so angeordnet, dass wenigstens die beiden Abstände C1 und C2 gleich groß sind. In diesem Zusammenhang kommen insbesondere folgende Abstandsvarianten zur Anwendung:
(C1 = C2) > C3
C1 = C2 = C3

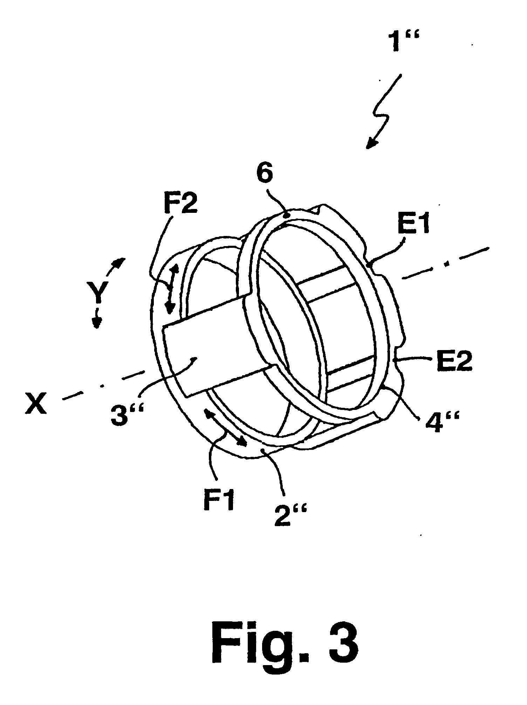

Fig. 3 zeigt nun eine Haltemanschette **1"**mit einem Haltering **2"** und insgesamt vier Haltestegen **3"**. Diese sind dabei so angeordnet, dass in Umfangsrichtung Y des Halteringes innerhalb einer Gruppe von drei Haltestegen zwei kleine Abstände E1, E2 einerseits und zwischen den beiden äußeren Haltestegen dieser Gruppe und dem vierten Haltesteg zwei große Abstände F1, F2 andererseits gebildet werden, wobei die beiden kleinen Abstände E1, E2 und die beiden großen Abstände F1, F2 jeweils untereinander konstant sind. Die großen Abstände F1, F2 sind vorzugsweise das fünfbis sechsfache der kleinen Abstände E1, E2.

Während bei den Ausführungsbeispielen gemäß Fig. 1 und Fig. 2 die einzelnen Haltekragen **4** bzw. **4'** in Umfangsrichtung Y des Halteringes **2** bzw. **2'**voneinander getrennt sind, wobei die Breite eines Haltekragens etwa der Breite des jeweiligen Haltesteges entspricht, sind bei dem Ausführungsbeispiel gemäß Fig. 3 die einzelnen Haltekragen **4"** in Umfangsrichtung Y miteinander verbunden, und zwar unter Bildung eines Kragenringes **6**, der auch als zweiter Haltering bezeichnet werden kann. In Axialrichtung X ist der Haltering **2"** breiter als der Kragenring **6**.

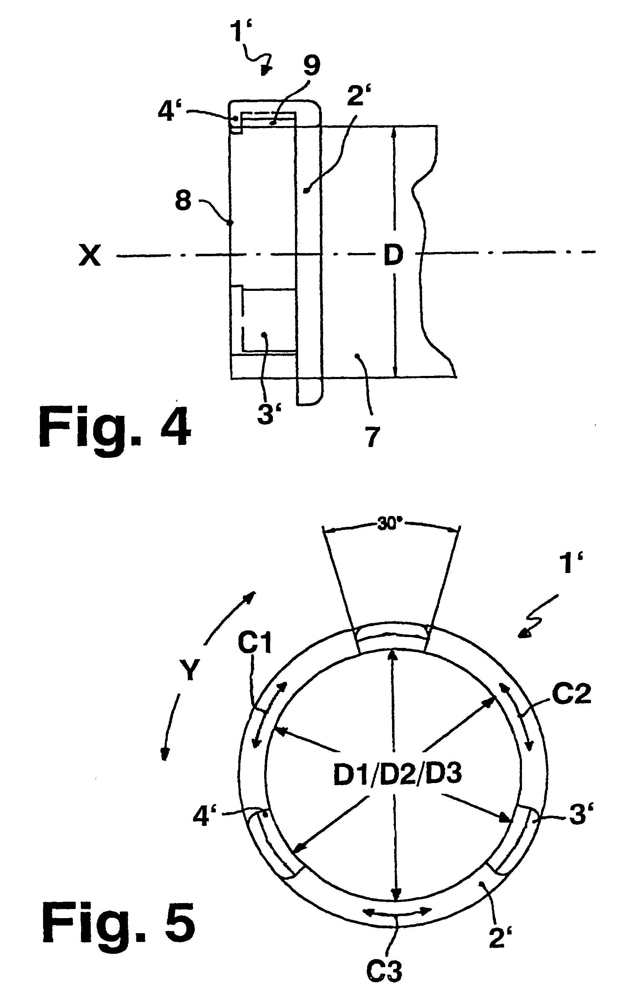

Bei den Ausführungsbeispielen gemäß Fig. 1 bis 3 beträgt die Breite jedes Haltesteges in Umfangsrichtung Y etwa 30°, wobei diesbezüglich ferner auf die Fig. 5 verwiesen wird.

In Bezug auf das Ausführungsbeispiel gemäß Fig. 2 (Abstandsvariante: C1 = C2 = C3) werden nun konstruktive Details der Schlauchanordnung und der Haltemanschette beschrieben.

Nach Fig. 4 ist auf das Schlauchende 7 mit einem Außendurchmesser D die Haltemanschette **1'** mit dem Haltering **2'** und den in Axialrichtung X verlaufenden Haltestegen **3'** aufgebracht, wobei die Haltekragen **4'** der Stirnseite **8** des Schlauchendes zugewandt sind. Die Haltekragen dienen der Fixierung der Schellen. Innerhalb des Aufnahmeraumes **9** befindet sich die Schelle, insbesondere Schraubschelle (hier nicht eingezeichnet).

Fig. 5 zeigt nun nochmals die Haltemanschette **1'** im Rahmen einer Radialschnittdarstellung. Der Haltering **2'** weist dabei einen innendurchmesser D1 auf. Die Haltekragen **4'** der insgesamt drei Haltestege **3'** sind so konstruiert, dass Ringsegmente mit einem formalen Innendurchmesser D2 gebildet werden.

Werden nun in Bezug auf das Ausführungsbeispiel gemäß Fig. 2 die einzelnen Haltekragen **4'** in Umfangsrichtung Y des Halteringes **2'** miteinander verbunden, so entsteht ein Kragenring mit einem Innendurchmesser D3.

Die Innendurchmesser D1, D2 und D3 sind vorzugsweise gleich. Der Innendurchmesser D1 des Halteringes ist kleiner als der Außendurchmesser D des Schlauchendes, und zwar unter Bildung einer vorgespannten Haltemanschette, wobei die Vorspannung etwa 5 bis 10 % beträgt. Auf diese Weise wird eine besonders verliersichere Vormontage gewährleistet.

Der Schlauch bzw. das Schlauchende und die Haltemanschette bestehen aus einem Elastomeren oder einem thermoplastischen Elastomeren (Kurzform: TPE).Dabei weist die Haltemanschette eine größere Shore-Härte auf als der Schlauch bzw. das Schlauchende.

In Verbindung mit diesen werkstoffspezifischen Eigenschaften lässt sich auch bei vorgespannter Haltemanschette das Schlauchende leicht auf den Stutzen, der gegebenenfalls mit einem Stutzenwulst versehen ist, aufschieben.

Ferner kann die Haltemanschette im sichtbaren Bereich eine Einbau- und Montagemarkierung aufweisen, vorzugsweise in Form einer Farbmarkierung oder Prägung, wobei beispielsweise auf die Markierung **5** im Bereich des Halteringes 2 gemäß Fig. 1 verwiesen wird.

Darüber hinaus kann die Haltemanschette und/oder die Schelle zusätzlich Klebepunkte aufweisen.

Die Haltemanschette beinhaltet eine bauteilunabhängige Lösung, da diese auf alle Schlauchenden gleichen Durchmessers montiert werden kann. Hiermit wird auch ein kostengünstiger Weg beschritten.

Ferner kann die Schelle mit unterschiedlichem Öffnungsmaß in die Haltemanschette vormontiert werden, da in Umfangsrichtung Y zwischen den einzelnen Haltestegen ausreichend Raum zur Verfügung steht.

### Bezugszeichenliste

- **1, 1', 1 "**: Haltemanschette
- **2, 2', 2"**: Haltering
- **3, 3', 3"**: Haltesteg
- **4, 4', 4"**: Haltekragen
- **5**: Einbau- und Montagemarkierung
- **6**: Kragenring
- **7**: Schlauchende
- **8**: Stirnseite des Schlauchendes
- **9**: Aufnahmeraum für die Schelle
- D: Außendurchmesser des Schlauchendes
- D1: Innendurchmesser des Halteringes
- D2: formaler Innendurchmesser der Kragen-Ringsegmente
- D3: Innendurchmesser des Kragenringes
- A, B: Abstände zwischen zwei Haltestegen
- C1, C2, C3: Abstände zwischen drei Haltestegen
- E1, E2, F1, F2: Abstände zwischen vier Haltestegen
- X: Axialrichtung
- Y: Umfangsrichtung des Halteringes

## Patentansprüche

1. Schlauchanordnung, umfassend einen Schlauch aus polymerem Werkstoff, der insbesondere mit einem eingebetteten Festigkeitsträger versehen ist, wobei wenigstens ein Schlauchende (7) auf einen Stutzen aus Metall oder Kunststoff aufgeschoben ist, wobei wiederum eine Schelle, insbesondere eine Schraubschelle, das Schlauchende auf den Stutzen presst, wobei das Schlauchende mit einer aufgeschobenen Haltemanschette aus polymerem Werkstoff für die Schelle versehen ist, wobei Wiederum die Haltemanschette (1, 1', 1") im Rahmen eines einstückigen Formteiles folgende Bauteile umfasst:
- einen Haltering (2, 2', 2") mit einem Innendurchmesser D1, der das Schlauchende (7) mit einem Außendurchmesser D umgreift;
- eine Schellenaufnahme in Form von wenigstens zwei axial verlaufenden Haltestegen (3, 3'. 3"), die jeweils über ihr eines Ende mit dem Haltering (2, 2', 2") verbunden sind; sowie
- einen Haltekragen (4, 4', 4") am anderen Ende eines jeden Haltesteges (3, 3', 3");
**dadurch gekennzeichnet, dass**
- der Innendurchmesser D1 des Halteringes (2, 2', 2") kleiner ist als der Außendurchmesser D des Schlauchendes (7), und zwar unter Bildung einer vorgespannten Haltemanschette (1, 1', 1");
- die Haltemanschette (1, 1', 1") so angeordnet ist, dass die Haltekragen (4, 4', 4") der Stirnseite (8) des Schlauchendes (7) zugewandt sind; sowie
- der Schlauch bzw. das Schlauchende (7) und die Haltemanschette (1, 1', 1") aus einem Elastomeren oder einem thermoplastischen Elastomeren bestehen, wobei die Haltemanschette eine größere Shore-Härte aufweist als der Schlauch bzw. das Schlauchende.

2. Schlauchanordnung nach Anspruch 1, **dadurch gekennzeichnet, dass** die Anzahl der Haltestege (3, 3', 3") zwei bis vier beträgt.

3. Schlauchanordnung nach Anspruch 1 oder 2, **dadurch gekennzeichnet, dass** zwei Haltestege (3) vorhanden sind, die so angeordnet sind, dass in Umfangsrichtung Y des Halteringes (2) zwischen den beiden Haltestegen ein kleiner Abstand A einerseits und ein großer Abstand B andererseits gebildet werden.

4. Schlauchanordnung nach Anspruch 3, **dadurch gekennzeichnet, dass** der größere. Abstand B das zwei- bis dreifache des kleineren Abstandes A ist.

5. Schlauchanordnung nach Anspruch 1 oder 2, **dadurch gekennzeichnet, dass** drei Haltestege (3') vorhanden sind, die so angeordnet sind, dass in Umfangsrichtung Y des Halteringes (2') zwischen den Haltestegen (3') dzei Abstände C1, C2, C3 gebildet werden, von denen wenigstens zwei Abstände C1, C2 gleich groß sind, insbesondere in Verbindung mit folgenden Abstandsvarianten:
(C1 = C2) > C3
C1 = C2 = C3

6. Schlauchanordnung nach Anspruch 1 oder 2, **dadurch gekennzeichnet, dass** vier Haltestege (3") vorhanden sind, die so angeordnet sind, dass in Umfangsrichtung Y des Halteringes (2") innerhalb einer Gruppe von drei Haltestegen zwei kleine Abstände E1, E2 einerseits und zwischen den beiden äußeren Haltestegen dieser Gruppe und dem vierten Haltesteg zwei große Abstände F1, F2 andererseits gebildet werden, wobei die beiden kleinen Abstände E1, E2 und die beiden großen Abstände F1, F2 jeweils untereinander konstant sind.

7. Schlauchanordnung nach Anspruch 6, **dadurch gekennzeichnet, dass** die großen Abstände F1, F2 das drei- bis siebenfache, vorzugsweise das fünf- bis sechsfache, der kleinen Abstände E1, E2 sind.

8. Schlauchanordnung nach einem der Ansprüche 1 bis 7, **dadurch gekennzeichnet, dass** die Breite der Haltestege (3, 3', 3") innerhalb der Haltemanschette (1, 1', 1") jeweils gleich ist.

9. Schlauchanordnung nach einem der Ansprüche 1 bis 8, **dadurch gekennzeichnet, dass** die einzelnen Haltekragen (4, 4') in Umfangsrichtung Y des Halteringes voneinander getrennt sind.

10. Schlauchanordnung nach Anspruch 9, **dadurch gekennzeichnet, dass** die Breite eines Haltekragens (4, 4') etwa der Breite des jeweiligen Haltesteges (3, 3') entspricht.

11. Schlauchanordnung nach Anspruch 9 oder 10, **dadurch gekennzeichnet, dass** die einzelnen Haltekragen (4, 4') so konstruiert sind, dass Ringsegmente mit einem formalen Innendurchmesser D2 gebildet werden.

12. Schlauchanordnung nach Anspruch 11, **dadurch gekennzeichnet, dass** der formale Innendurchmesser D2 der Ringsegmente dem Innendurchmesser D1 des Halteringes (2, 2') entspricht.

13. Schlauchanordnung nach einem der Ansprüche 1 bis 8, **dadurch gekennzeichnet, dass** die einzelnen Haltekragen (4") in Umfangsrichtung Y des Halteringes (2") miteinander verbunden sind, und zwar unter Bildung eines Kragenringes (6) mit einem Innendurchmesser D3.

14. Schlauchanordnung nach Anspruch 13, **dadurch gekennzeichnet, dass** der Innendurchmesser D3 des Kragenringes (6) dem Innendurchmesser D1 des Halteringes (2") entspricht.

15. Schlauchanordnung nach Anspruch 13 oder 14, **dadurch gekennzeichnet, dass** in Axialrichtung X des Schlauchendes (7) der Haltering (2") breiter ist als der Kragenring (6).

16. Schlauchanordnung nach einem der Ansprüche 1 bis 15, **dadurch gekennzeichnet, dass** die Haltemanschette (1, 1', 1") in einem sichtbaren Bereich eine Einbau- und Montagemarkierung (5) aufweist, vorzugsweise in Form einer Farbmarkierung oder Prägung.

17. Schlauchanordnung nach Anspruch 16, **dadurch gekennzeichnet, dass** die Einbau- und Montagemarkierung (5) am Haltering und/oder Haltesteg angebracht ist.

18. Schlauchanordnung nach einem der Ansprüche 1 bis 17, **dadurch gekennzeichnet, dass** die Haltemanschette (1, 1', 1") und/oder die Schelle Klebepunkte aufweist.

## Claims

1. Hose arrangement, comprising a hose made of polymer material which is provided in particular with an embedded strength member, in which at least one hose end (7) is slid onto a connector made of metal or plastic, in which again a clip, in particular a screw clip, presses the hose end on to the connector, in which the hose end is provided with a retaining sleeve which is made of polymer material and slid on for the clip, in which again the retaining sleeve (1, 1', 1") as a one-piece moulding comprises the following components:
- a retaining ring (2, 2', 2") with an inside diameter D1 which embraces the hose end (7) with an outside diameter D,
- a clip mounting in the form of at least two retaining lugs (3, 3', 3") which run axially and are each connected by one end to the retaining ring (2, 2', 2"), and
- a retaining collar (4, 4', 4") at the other end of each retaining lug (3, 3', 3"),
**characterised in that**
- the inside diameter D1 of the retaining ring (2, 2', 2") is less than the outside diameter D of the hose end (7), forming a preloaded retaining sleeve (1, 1', 1"),
- the retaining sleeve (1, 1', 1") is arranged so that the retaining collars (4, 4', 4") face the front side (8) of the hose end (7), and
- the hose or hose end (7) and the retaining sleeve (1, 1', 1") are made of an elastomer or a thermoplastic elastomer, and the retaining sleeve has a greater Shore hardness than the hose or hose end.

2. Hose arrangement according to claim 1, **characterised in that** the number of retaining lugs (3, 3', 3") is two to four.

3. Hose arrangement according to claim 1 or 2, **characterised in that** two retaining lugs (3) are present which are arranged so that in the circumferential direction Y of the retaining ring (2) there is a small gap A between the two retaining lugs on one side and a large gap B on the other side.

4. Hose arrangement according to claim 3, **characterised in that** the larger gap B is two to three times the smaller gap A.

5. Hose arrangement according to claim 1 or 2, **characterised in that** three retaining lugs (3') are present which are arranged so that in the circumferential direction Y of the retaining ring (2') there are three gaps C1, C2, C3 between the retaining lugs (3'), of which at least two gaps C1, C2 are the same size, in particular in conjunction with the following gap variants:
(C1 = C2) > C3
C1 = C2 = C3.

6. Hose arrangement according to claim 1 or 2, **characterised in that** four retaining lugs (3") are present which are arranged so that in the circumferential direction Y of the retaining ring (2") within a group of three retaining lugs there are two small gaps E1, E2 on one side and between the two outer retaining lugs of this group and the fourth retaining lug there are two large gaps F1, F2 on the other side, the two small gaps E1, E2 and the two large gaps F1, F2 in which case being constant.

7. Hose arrangement according to claim 6, **characterised in that** the large gaps F1, F2 are three to seven times, preferably five to six times the small gaps E1, E2.

8. Hose arrangement according to one of claims 1 to 7, **characterised in that** the width of the retaining lugs (3, 3', 3") within the retaining sleeve (1, 1', 1") is in each case the same.

9. Hose arrangement according to one of claims 1 to 8, **characterised in that** the individual retaining collars (4, 4') are separated from one another in the circumferential direction (Y) of the retaining ring.

10. Hose arrangement according to claim 9, **characterised in that** the width of one retaining collar (4, 4') roughly corresponds to the width of the respective retaining lug (3, 3').

11. Hose arrangement according to claim 9 or 10, **characterised in that** the individual retaining collars (4, 4') are designed so that annular segments are formed with a formal inside diameter D2.

12. Hose arrangement according to claim 11, **characterised in that** the formal inside diameter D2 of the annular segments corresponds to the inside diameter D1 of the retaining ring (2, 2').

13. Hose arrangement according to one of claims 1 to 8, **characterised in that** the individual retaining collars (4") are connected to one another in the circumferential direction Y of the retaining ring (2"), forming a collar ring (6) with an inside diameter D3.

14. Hose arrangement according to claim 13, **characterised in that** the inside diameter D3 of the collar ring (6) corresponds to the inside diameter D1 of the retaining ring (2").

15. Hose arrangement according to claim 13 or 14, **characterised in that** the retaining ring (2") is wider than the collar ring (6) in the axial direction X of the hose end (7).

16. Hose arrangement according to one of claims 1 to 15, **characterised in that** the retaining sleeve (1, 1', 1") exhibits an installation and assembly mark (5), preferably in the form of a coloured mark or impression, in a visible area.

17. Hose arrangement according to claim 16, **characterised in that** the installation and assembly mark (5) is applied on the retaining ring and/or retaining lug.

18. Hose arrangement according to one of claims 1 to 17, **characterised in that** the retaining sleeve (1, 1', 1") and/or the clip exhibits gluing points.

## Revendications

1. Système tubulaire comprenant un tuyau en matériau polymère, muni en particulier d'un support de résistance incorporé, au moins une extrémité de tuyau (7) étant enfilée sur une tubulure en métal ou en matière synthétique, sachant qu'à son tour, un collier, en particulier un collier vissé, presse l'extrémité de tuyau sur la tubulure, où l'extrémité de tuyau est munie d'une manchette de maintien enfilée, en matériau polymère, pour le collier, à son tour la manchette de maintien (1, 1', 1") comprend, dans le cadre d'une pièce moulée monobloc, les composants suivants :
- une bague de maintien (2, 2', 2") d'un diamètre intérieur D1, entourant l'extrémité de tuyau (7) d'un diamètre extérieur D ;
- un logement de collier, ayant la forme d'au moins deux nervures de maintien (3, 3', 3") s'étendant axialement, reliées chaque fois, par une de leurs extrémités, à la bague de maintien (2, 2', 2") ;
- une collerette de maintien (4, 4', 4") à l'autre extrémité de chaque nervure de maintien (3, 3', 3"),
**caractérisé en ce que**
- le diamètre intérieur D1 de la bague de maintien (2, 2', 2") est inférieur au diamètre extérieur D de l'extrémité de tuyau (7) et, précisément, en formant une manchette de maintien (1, 1', 1") précontrainte ;
- la manchette de maintien (1, 1', 1") est disposée de manière que la collerette de maintien (4, 4', 4") soit tournée vers la face frontale (8) de l'extrémité de tuyau (7) ; et
- le tuyau, respectivement l'extrémité de tuyau (7) et la manchette de maintien (1, 1', 1"), sont formés d'un élastomère ou bien d'un élastomère thermoplastique, la manchette de maintien ayant une dureté Shore supérieure à celle du tuyau, respectivement de l'extrémité de tuyau.

2. Système tubulaire selon la revendication 1, **caractérisé en ce que** le nombre de nervures de maintien (3, 3', 3") est de deux à quatre.

3. Système tubulaire selon la revendication 1 ou 2, **caractérisé en ce que** deux nervures de maintien (3) sont prévues, disposées de manière que, en direction périphérique V de la bague de maintien (2), entre les deux nervures de maintien, soit formé un petit espacement A, d'une part, et un grand espacement B, d'autre part.

4. Système tubulaire selon la revendication 3, **caractérisé en ce que** l'espacement B le plus grand est de deux à trois fois l'espacement A le plus petit.

5. Système tubulaire selon la revendication 1 ou 2, **caractérisé en ce que** trois nervures de maintien (3') sont prévues, disposées de manière que, en direction périphérique de la bague de maintien (02), entre les nervures de maintien (3'), soient formés trois espacements C1, C2, C3, dont au moins deux espacements C1, C2 sont de même valeur, en particulier en liaison avec les variantes d'espacement suivantes :
(C1 = C2) > C3
C1 = C2 = C3

6. Système tubulaire selon la revendication 1 ou 2, **caractérisé en ce que** sont prévues quatre nervures de maintien (3"), disposées de manière que, en direction périphérique Y de la bague de maintien (2"), à l'intérieur d'un groupe de trois nervures de maintien, soient formés deux petits espacements E1, E2 d'une part et, entre les deux bagues de maintien extérieures de ce groupe et la quatrième nervure de maintien, soient formés deux grands espacements F1, F2, d'autre part, sachant que les deux petits espacements E1, E2 et les deux grands espacements F1, F2 sont chacun mutuellement constants.

7. Système tubulaire selon la revendication 6, **caractérisé en ce que** les grands espacements F1, F2 sont du triple au septuple, de préférence du quintuple au sextuple, des petits espacements F1, F2.

8. Système tubulaire selon l'une des revendications 1 à 7, **caractérisé en ce que** la largeur des nervures de maintien (3, 3', 3") à l'intérieur de la manchette de maintien (1, 1', 1") est chaque fois identique.

9. Système tubulaire selon l'une des revendications 1 à 8, **caractérisé en ce que** les différentes collerettes de maintien (4, 4') sont séparées les unes des autres dans la direction périphérique (Y) de la bague de maintien.

10. Système tubulaire selon la revendication 9, **caractérisé en ce que** la largeur d'une collerette de maintien (4, 4') correspond au moins à celle de la nervure de maintien (3, 3') respective.

11. Système tubulaire selon la revendication 9 ou 10, **caractérisé en ce que** les différentes collerettes de maintien (4, 4") sont construites de manière que des segments annulaires d'un diamètre intérieur D2 formel soient formés.

12. Système tubulaire selon la revendication 11, **caractérisé en ce que** le diamètre intérieur D2 formel des segments annulaires correspond au diamètre intérieur D1 de la bague de maintien (2, 2").

13. Système tubulaire selon l'une des revendications 1 à 8, **caractérisé en ce que** les différentes collerettes de maintien (4") sont reliées ensemble en direction périphérique Y de la bague de maintien (2") et, précisément, en formant une bague à collerettes (6) d'un diamètre intérieur D3.

14. Système tubulaire selon la revendication 13, **caractérisé en ce que** le diamètre intérieur D3 de la bague à collerettes (6) correspond au diamètre intérieur D1 de la bague de maintien (2").

15. Système tubulaire selon la revendication 13 ou 14, **caractérisé en ce que**, observé dans la direction axiale X de l'extrémité de tuyau (7), la bague de maintien (2") est plus large que la bague à collerettes (6).

16. Système tubulaire selon l'une des revendications 1 à 15, **caractérisé en ce que** la manchette de maintien (1, 1', 1") présente, dans une zone visible, un marquage d'insertion et de montage (5), de préférence ayant la forme d'un marquage en couleur ou d'un formage tridimensionnel.

17. Système tubulaire selon la revendication 16, **caractérisé en ce que** le dispositif d'insertion et de marquage (5) est monté sur la bague de maintien et/ou la nervure de maintien.

18. Système tubulaire selon l'une des revendications 1 à 17, **caractérisé en ce que** la manchette de maintien (1, 1', 1") et/ou le collier présente(nt) des points de collage.
